# EUROPÄISCHE PATENTSCHRIFT

(11) **EP 3 984 685 B1**
(45) Veröffentlichungstag und Bekanntmachung des Hinweises auf die Patenterteilung: **14.08.2024**
(21) Anmeldenummer: 21195056.3
(22) Anmeldetag: 06.09.2021
(51) Int. Cl.: B23K 26/00, B22F 3/24, B23K 26/03, B23K 26/144, B23K 26/34, B23K 26/364, B23K 26/402, B60C 13/00

(54) **VERFAHREN ZUR HERSTELLUNG EINER OBERFLÄCHENSTRUKTUR EINES BAUTEILS**
METHOD OF PRODUCING A SURFACE STRUCTURE OF A COMPONENT
PROCÉDÉ DE FABRICATION D'UNE STRUCTURE DE SURFACE D'UN COMPOSANT

(30) Priorität: 13.10.2020 DE 102020212906
(43) Veröffentlichungstag der Anmeldung: 20.04.2022
(73) Patentinhaber: Continental Reifen Deutschland GmbH, 30175 Hannover (DE)
(72) Erfinder: Hoppe, Nicholas, 30165 Hannover (DE); Dzick, Jürgen, 30165 Hannover (DE)
(74) Vertreter: Continental Corporation

(56) Entgegenhaltungen:
- WO-A1-2019/206546
- US-A1- 2018 354 078
- US-A1- 2019 329 356

## Beschreibung

Die Erfindung betrifft ein Verfahren, eine Vorrichtung und ein Bauteil.

Die Erfindung geht aus von einem Verfahren zur Herstellung einer Oberflächenstruktur eines Bauteils, aufweisend die folgenden Schritte:
- Bereitstellen eines Bauteils;
- Aufbringen einer Pulverschicht mit einer vorgegebenen Schichtdicke auf dem Bauteil;
- Umschmelzen eines Bereichs der Pulverschicht mittels eines kontinuierlich wirkenden Lasers, derart, dass ein umgeschmolzener Bereich der Pulverschicht erzeugt wird;
- Abtragen eines Abtragbereichs des umgeschmolzenen Bereichs mittels eines gepulst wirkenden Lasers, derart, dass eine Soll-Oberfläche des umgeschmolzenen Bereichs erzeugt wird.

Mittels der Soll-Oberfläche kann die gewünschte Oberflächenstruktur geschaffen werden. Die geschaffenen Oberflächen sind insbesondere mehrfach gekrümmte Oberflächen und/oder für Werkzeuge schwerzugängliche Oberflächen und Oberflächenbereiche von Reifenformsegmentbauteilen oder Reifenheizformsegmenten.

Bei der Pulverschicht kann es sich um eine Schicht handeln, die aus einem Metallpulver, einem Stahlpulver, einem Aluminiumpulver oder einem Titanpulver ausgebildet ist.

Die Anordnung der Pulverschichten erfolgt insbesondere in Abhängigkeit der gewünschten Oberflächenstruktur. Dazu kann mittels eines computergestützten Verfahrens die Anordnung der Pulverschichten berechnet werden. Durch die Anordnung der Pulverschichten im Wege einer im Wesentlichen zweidimensionalen Approximation kann dann eine dreidimensionale Oberflächenstruktur geschaffen werden.

Die Schichtdicke der Pulverschicht kann verschiedene Werte annehmen und beträgt beispielsweise 30 µm.

Aufgrund der Pulverschichtdicke erzeugte Stufen können zu Prozessartefakten in Form von Oberflächenrauheiten führen. Mittels des Abtragens sollen diese Prozessartefakte beseitigt werden.

Aus dem Stand der Technik sind Verfahren zur Herstellung einer Oberflächenstruktur eines Bauteils bekannt. Dabei ist es auch bekannt, zunächst mittels eines Schichtverfahrens eine Struktur zu erzeugen und dann mittels eines Abtragverfahrens Änderungen an dieser Struktur vorzunehmen. Der aus dem Stand der Technik bekannte technologische Hintergrund wird insbesondere gebildet durch US 2018354078, US 2019329356 (offenbarend alle Merkmale des Oberbegriffs des Anspruchs 1), und WO 2019206546.

Bei den aus dem Stand der Technik bekannten Verfahren ist es üblich, das Aufbringen und Umschmelzen in einem gegenüber dem Vorgang des Abtragens separaten Verfahren und mit jeweils separaten Vorrichtungen vorzunehmen.

Der Umstand, dass das Aufbringen und Umschmelzen gegenüber dem Abtragen mittels separater Vorrichtungen und in separaten Verfahren durchgeführt werden, könnte mit einem erhöhten Aufwand einhergehen.

Der Erfindung legt daher die Aufgabe zu Grunde, ein Verfahren bereitzustellen, mittels dem auf einfachere Weise eine Oberflächenstruktur eines Bauteils hergestellt werden kann.

Ein Verfahren zur Herstellung einer Oberflächenstruktur eines Bauteils entsprechend der Erfindung ist im Anspruch 1 definiert.

Durch den erfindungsgemäßen Umstand, wonach die Schritte des Aufbringens der Pulverschicht, des Umschmelzens eines Bereichs der Pulverschicht und des Abtragens des Abtragbereichs mittels einer einzigen Vorrichtung durchgeführt werden, wird eine synergetische Zusammenführung von Einzelprozessen ermöglicht. Bei den Einzelprozessen handelt es sich um das Aufbringen und Umschmelzen einerseits sowie um das Abtragen andererseits. Die Zusammenführung der Einzelprozesse mittels einer einzigen Vorrichtung geht mit einer Mehrfachnutzung bestehender Komponenten dieser Vorrichtung einher. Die Vorrichtung weist insbesondere ein für alle Komponenten gemeinsames Anlagengehäuse auf, in dem die Komponenten technisch redundanzlos verbaut werden können.

Diese synergetische Zusammenführung führt insgesamt zu einem einfacheren und aufwandsgeringeren Verfahren.

Mittels des erfindungsgemäßen Verfahrens können dreidimensionale Strukturen aufgebaut und erzeugt werden, wobei diese Strukturen beispielsweise Hinterschnitte oder geschlossene Hohlräume aufweisen. Die Innenflächen und/oder abgeschattete Bereiche der Hinterschnitte oder der geschlossenen Hohlräume können dann gewünschte Oberflächeneigenschaften aufweisen, wobei zu den Oberflächeneigenschaften beispielsweise gezählt werden kann, dass diese Innenflächen mittels eines Lasers poliert sind.

Somit wird ein technisch aufwandsgeringeres und insgesamt verbessertes Verfahren bereitgestellt.

Weitere vorteilhafte Ausgestaltungsformen der vorliegenden Erfindung sind Gegenstand der Unteransprüche Gemäß der Erfindung werden die Schritte des Aufbringens der Pulverschicht, des Umschmelzens eines Bereichs der Pulverschicht und des Abtragens des Abtragbereichs wiederholt nacheinander durchgeführt, bis eine finale Oberflächenstruktur des Bauteils erzeugt worden ist, wobei die Pulverschichten aufeinander aufgebracht werden.

Durch den erfindungsgemäßen Umstand, wonach die Schritte des Aufbringens der Pulverschicht, des Umschmelzens eines Bereichs der Pulverschicht und des Abtragens des Abtragbereichs wiederholt nacheinander durchgeführt werden, bis eine finale Oberflächenstruktur des Bauteils erzeugt worden ist, wobei die Pulverschichten aufeinander aufgebracht werden, wird ein iteratives Verfahren bereitgestellt, mittels dem Oberflächenstrukturen mit gewünschten Oberflächeneigenschaften mit geschaffen werden können.

Gemäß einer nächsten vorteilhaften Ausgestaltungsform der vorliegenden Erfindung wird nach dem Abtragen des Abtragbereichs die Soll-Oberfläche des umgeschmolzenen Bereichs mittels eines Lasers poliert, wobei es sich bei dem Laser um den kontinuierlich wirkenden Laser oder um den gepulst wirkenden Laser handelt.

Durch den erfindungsgemäßen Umstand, wonach nach dem Abtragen des Abtragbereichs die Soll-Oberfläche des umgeschmolzenen Bereichs mittels eines Lasers poliert wird, wobei es sich bei dem Laser um den kontinuierlich wirkenden Laser oder um den gepulst wirkenden Laser handelt, kann die durch Abtragung entstandene Soll-Oberfläche homogenisiert werden. Die Homogenisierung betrifft die Oberflächeneigenschaften, wie beispielsweise eine Rauheit, der Oberfläche.

Gemäß einer nächsten vorteilhaften Ausgestaltungsform der vorliegenden Erfindung wird für den Fall, wonach die Schritte des Aufbringens der Pulverschicht, des Umschmelzens eines Bereichs der Pulverschicht und des Abtragens des Abtragbereichs wiederholt nacheinander durchgeführt werden, bis eine finale Oberflächenstruktur des Bauteils erzeugt worden ist, die Soll-Oberfläche nach jedem Abtragen des Abtragbereichs poliert.

Durch den erfindungsgemäßen Umstand, wonach für den Fall, wonach die Schritte des Aufbringens der Pulverschicht, des Umschmelzens eines Bereichs der Pulverschicht und des Abtragens des Abtragbereichs wiederholt nacheinander durchgeführt werden, bis eine finale Oberflächenstruktur des Bauteils erzeugt worden ist, die Soll-Oberfläche nach jedem Abtragen poliert wird, können die durch Abtragung entstandenen Soll-Oberflächen nach jedem Abtragen homogenisiert werden. Dies kann zu einer verbesserten Homogenisierung der gesamten Oberflächenstruktur führen.

Gemäß einer nächsten vorteilhaften Ausgestaltungsform der vorliegenden Erfindung werden die Schritte des Umschmelzens und des Abtragens des Abtragbereichszeitgleich an verschiedenen Bereichen des Bauteils durchgeführt oder die Schritte des Umschmelzens und des Abtragens des Abtragbereichs können zeitgleich an verschiedenen Bereichen des Bauteils durchgeführt werden.

Durch den erfindungsgemäßen Umstand, wonach die Schritte des Umschmelzens und des Abtragens des Abtragbereichs zeitgleich an verschiedenen Bereichen des Bauteils durchgeführt werden oder die Schritte des Umschmelzens und des Abtragens des Abtragbereichs zeitgleich an verschiedenen Bereichen des Bauteils durchgeführt werden können, kann das gesamte Verfahren effizienter gestaltet werden. Grund für die Steigerung der Effizienz ist, dass einzelne Prozessschritte zeitlich nicht nacheinander, sondern parallel durchgeführt werden beziehungsweise durchgeführt werden können.

Weitere Vorteile, Merkmale und Einzelheiten, auf die die Erfindung in ihrem Umfang nicht beschränkt ist, werden nun anhand der Zeichnung näher beschrieben.

Es zeigt:

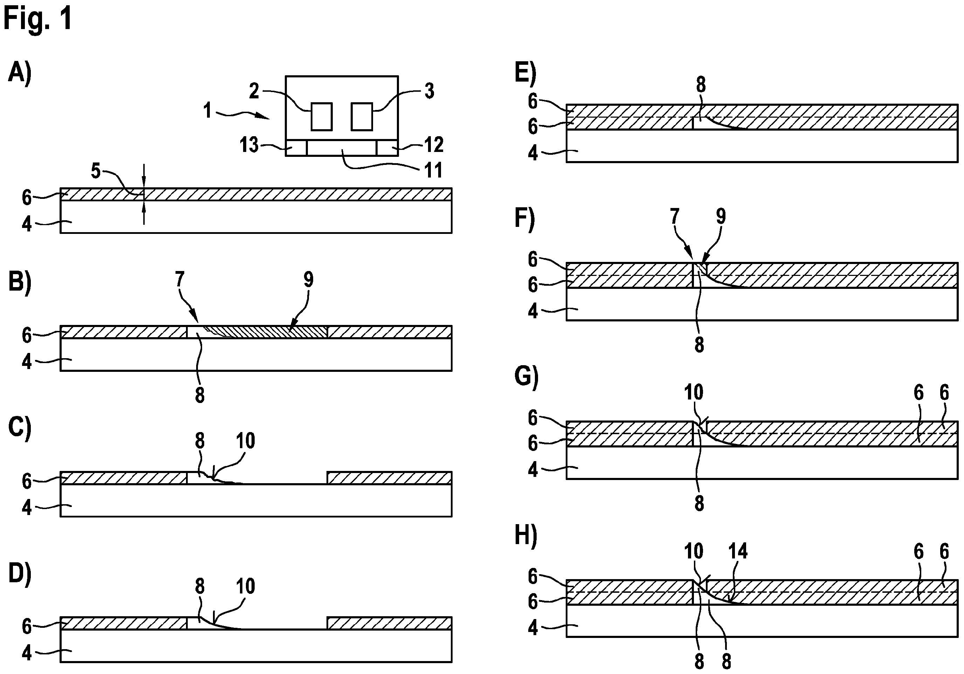

Fig. 1: eine schematische Darstellung von Schritten des erfindungsgemäßen Verfahrens.

In der Figur 1 sind Schritte des erfindungsgemäßen Verfahrens schematisch dargestellt.

In Schritt A ist auf einem Bauteil 4 eine Pulverschicht 6 mittels einer Vorrichtung 1 angeordnet worden. Die Vorrichtung 1 weist einen kontinuierlich wirkenden Laser 2, einen gepulst wirkenden Laser 3 und insbesondere eine Komponente 13 zur Auftragung der Pulverschicht 6 auf. Insbesondere weist die Vorrichtung 1 Strahlführungsmittel 11 und eine optisches Erfassungssystem 12 auf.

Die Pulverschicht 6 weist eine vorgegebene Schichtdicke 5 auf.

In Schritt B ist ein Bereich 7 der Pulverschicht 6 mittels des kontinuierlich wirkenden Lasers 2 umgeschmolzen worden, derart, dass ein umgeschmolzener Bereich 8 der Pulverschicht 6 erzeugt worden ist. Ein Abtragbereich 9 ist zum Abtragen vorgesehen. Der Abtragbereich 9 ist Bestandteil des umgeschmolzenen Bereichs 8. In Schritt C ist der Abtragbereich 9 des umgeschmolzenen Bereichs 8 mittels des gepulst wirkenden Lasers 3 abgetragen worden, derart, dass eine Soll-Oberfläche 10 des umgeschmolzenen Bereichs 8 erzeugt worden ist.

Die Schritte des Aufbringens der Pulverschicht 6, des Umschmelzens eines Bereichs 7 der Pulverschicht 6 und des Abtragens des Abtragbereichs 9 sind erfindungsgemäß mittels der einzigen Vorrichtung 1 durchgeführt worden.

In Schritt D ist gemäß der dargestellten Ausführungsform nach dem Abtragen des Abtragbereichs 9 die Soll-Oberfläche 10 des umgeschmolzenen Bereichs 8 mittels des kontinuierlich wirkenden Lasers 2 poliert worden.

In Schritt E ist eine weitere Pulverschicht 6 mittels einer Vorrichtung 1 angeordnet worden.

In Schritt F ist ein Bereich 7 der weiteren Pulverschicht 6 mittels des kontinuierlich wirkenden Lasers 2 umgeschmolzen worden, derart, dass ein umgeschmolzener Bereich 8 der weiteren Pulverschicht 6 erzeugt worden ist.

In Schritt G ist ein Abtragbereich 9 des umgeschmolzenen Bereichs 8 mittels des gepulst wirkenden Lasers 3 abgetragen worden, derart, dass eine Soll-Oberfläche 10 des umgeschmolzenen Bereichs 8 erzeugt worden ist.

In Schritt H ist gemäß der dargestellten Ausführungsform nach dem Abtragen des Abtragbereichs 9 die Soll-Oberfläche 10 des umgeschmolzenen Bereichs 8 mittels des kontinuierlich wirkenden Laser 2 poliert worden.

Diese weiteren Schritte des Aufbringens der Pulverschicht 6, des Umschmelzens eines Bereichs 7 der Pulverschicht 6 und des Abtragens des Abtragbereichs 9 und des Polierens sind erneut mittels der einzigen Vorrichtung 1 durchgeführt worden.

Die Schritte des Aufbringens der Pulverschicht 6, des Umschmelzens eines Bereichs 7 der Pulverschicht 6 und des Abtragens des Abtragbereichs 9 werden wiederholt nacheinander durchgeführt, bis eine finale Oberflächenstruktur des Bauteils 4 erzeugt worden ist, wobei die Pulverschichten 6 aufeinander aufgebracht werden. Die Soll-Oberflächen 10 der umgeschmolzenen Bereiche 8 bilden die Oberfläche 14 des Bauteils 4 mit.

Die verbliebenen Bestandteile der Pulverschichten 6 werden nach Abschluss des Verfahrens entfernt.

### Bezugszeichenliste

- 1: Vorrichtung
- 2: Kontinuierlich wirkender Laser
- 3: Gepulst wirkender Laser
- 4: Bauteil
- 5: Vorgegebene Schichtdicke
- 6: Pulverschicht
- 7: Bereich der Pulverschicht
- 8: Umgeschmolzener Bereich der Pulverschicht
- 9: Abtragbereich
- 10: Soll-Oberfläche des umgeschmolzenen Bereichs
- 11: Strahlführungsmittel
- 12: Optisches Erfassungssystem
- 13: Komponente zur Auftragung der Pulverschicht
- 14: Oberfläche des Bauteils

## Patentansprüche

1. Verfahren zur Herstellung einer Oberflächenstruktur eines Bauteils (4), aufweisend die folgenden Schritte:
- Bereitstellen eines Bauteils (4);
- Aufbringen einer Pulverschicht (6) mit einer vorgegebenen Schichtdicke (5) auf dem Bauteil (4);
- Umschmelzen eines Bereichs (7) der Pulverschicht (6) mittels eines kontinuierlich wirkenden Lasers (2), derart, dass ein umgeschmolzener Bereich (8) der Pulverschicht (6) erzeugt wird;
- Abtragen eines Abtragbereichs (9) des umgeschmolzenen Bereichs (8) mittels eines gepulst wirkenden Lasers (3), derart, dass eine Soll-Oberfläche (10) des umgeschmolzenen Bereichs (8) erzeugt wird, wobei die Schritte des Aufbringens der Pulverschicht (6), des Umschmelzens eines Bereichs (7) der Pulverschicht (6) und des Abtragens des Abtragbereichs (9) mittels einer einzigen Vorrichtung (1) durchgeführt werden, **dadurch gekennzeichnet, dass** die Schritte des Aufbringens der Pulverschicht (6), des Umschmelzens eines Bereichs (7) der Pulverschicht (6) und des Abtragens des Abtragbereichs (9) wiederholt nacheinander durchgeführt werden, bis eine finale Oberflächenstruktur des Bauteils (4) erzeugt worden ist, wobei die Pulverschichten (6) aufeinander aufgebracht werden.

2. Verfahren nach Anspruch1, **dadurch gekennzeichnet, dass** nach dem Abtragen des Abtragbereichs (9) die Soll-Oberfläche (10) des umgeschmolzenen Bereichs (8) mittels eines Lasers (2, 3) poliert wird, wobei es sich bei dem Laser (2, 3) um den kontinuierlich wirkenden Laser (2) oder um den gepulst wirkenden Laser (3) handelt.

3. Verfahren nach dem vorhergehenden Anspruch, **dadurch gekennzeichnet, dass** für den Fall, wonach die Schritte des Aufbringens der Pulverschicht (6), des Umschmelzens eines Bereichs (7) der Pulverschicht (6) und des Abtragens des Abtragbereichs (9) wiederholt nacheinander durchgeführt werden, bis eine finale Oberflächenstruktur des Bauteils (4) erzeugt worden ist, die Soll-Oberfläche (10) nach jedem Abtragen des Abtragbereichs (9) poliert wird.

4. Verfahren nach einem der vorhergehenden Ansprüche, **dadurch gekennzeichnet, dass** die Schritte des Umschmelzens eines Bereichs (7) der Pulverschicht (6) und des Abtragens des Abtragbereichs (9) zeitgleich an verschiedenen Bereichen des Bauteils (4) durchgeführt werden oder durchgeführt werden können.

## Claims

1. Process for producing a surface structure of a component (4), comprising the steps of:
- providing a component (4);
- applying a powder layer (6) having a predetermined layer thickness (5) on the component (4);
- fusing a region (7) of the powder layer (6) using a continuous laser (2) such that a fused region (8) of the powder layer (6) is generated;
- ablating an ablation region (9) of the fused region (8) using a pulsed laser (3) such that a target surface (10) of the fused region (8) is generated, wherein the steps of applying the powder layer (6), fusing a region (7) of the powder layer (6) and ablating the ablation region (9) are performed using a single apparatus (1), **characterized in that** the steps of applying the powder layer (6), fusing a region (7) of the powder layer (6) and ablating the ablation region (9) are performed repeatedly in succession until a final surface structure of the component (4) has been produced, wherein the powder layers (6) are applied on top of one another.

2. Process according to Claim 1, **characterized in that** after the ablating of the ablation region (9) the target surface (10) of the fused region (8) is polished using a laser (2, 3), wherein the laser (2, 3) is the continuous laser (2) or the pulsed laser (3).

3. Process according to the preceding claim, **characterized in that**, in the case where the steps of applying the powder layer (6), fusing a region (7) of the powder layer (6) and ablating the ablation region (9) are performed repeatedly in succession until a final surface structure of the component (4) has been produced, the target surface (10) is polished after every ablating of the ablation region (9).

4. Process according to any of the preceding claims, **characterized in that** the steps of fusing a region (7) of the powder layer (6) and ablating the ablation region (9) are performed or may be performed simultaneously at different regions of the component (4).

## Revendications

1. Procédé de fabrication d'une structure de surface d'un pièce (4), comprenant les étapes suivantes :
- fourniture d'une pièce (4) ;
- application sur la pièce (4) d'une couche de poudre (6) ayant une épaisseur de couche (5) prédéfinie ;
- fusion d'une zone (7) de la couche de poudre (6) au moyen d'un laser (2) agissant en continu, de telle sorte qu'une zone fondue (8) de la couche de poudre (6) soit produite ;
- retrait d'une zone à retirer (9) de la zone fondue (8) au moyen d'un laser à action pulsée (3), de telle sorte qu'une surface cible (10) de la zone fondue (8) soit générée, les étapes d'application de la couche de poudre (6), de fusion d'une zone (7) de la couche de poudre (6) et de retrait de la zone à retirer (9) étant effectuées au moyen d'un seul dispositif (1), **caractérisé en ce que** les étapes d'application de la couche de poudre (6), de fusion d'une zone (7) de la couche de poudre (6) et de retrait de la zone à retirer (9) sont effectuées de manière répétée l'une après l'autre jusqu'à ce qu'une structure de surface finale de la pièce (4) ait été produite, les couches de poudre (6) étant appliquées les unes sur les autres.

2. Procédé selon la revendication 1, **caractérisé en ce qu'**après le retrait de la zone à retirer (9), la surface cible (10) de la zone fondue (8) est polie au moyen d'un laser (2, 3), le laser (2, 3) étant le laser à action continue (2) ou le laser à action pulsée (3).

3. Procédé selon la revendication précédente, **caractérisé en ce que**, dans le cas où les étapes d'application de la couche de poudre (6), de fusion d'une zone (7) de la couche de poudre (6) et de retrait de la zone à retirer (9) sont effectuées de manière répétée les unes après les autres jusqu'à ce qu'une structure de surface finale de la pièce (4) ait été produite, la surface cible (10) est polie après chaque retrait de la zone à retirer (9).

4. Procédé selon l'une des revendications précédentes, **caractérisé en ce que** les étapes de fusion d'une zone (7) de la couche de poudre (6) et de retrait de la zone à retirer (9) sont réalisées ou sont aptes à être réalisées simultanément sur différentes zones de la pièce (4).
